# EUROPEAN PATENT APPLICATION

(11) **EP 4 712 006 A1**
(43) Date of publication of application: **18.03.2026**
(21) Application number: 25200996.4
(22) Date of filing: 09.09.2025
(51) Int. Cl.: G06Q 30/0601, G06Q 20/32, G06Q 20/40

(54) **IN-VEHICLE E-COMMERCE PAYMENT SYSTEM**

(30) Priority: 16.09.2024 US 202418886091
(71) Applicant: Harman International Industries, Inc., Stamford, Connecticut 06901 (US)
(72) Inventor: WAHAB, Imran, Stamford, CT, 06901 (US)
(74) Representative: Westphal, Mussgnug & Partner, Patentanwälte mbB

(57) **Abstract**

A system for a vehicle includes a wireless transceiver configured to communicate with a mobile device via a wireless connection encrypted using a digital key, wherein the digital key allows the mobile device to access a driving function of a vehicle; and one or more controllers programmed to responsive to a user input indicative of an intent to make a purchase by a user of the vehicle, transmit a request to the mobile device to launch a payment for the purchase via the wireless connection, perform an authentication by interacting with the user to authorize the payment, and responsive to the authentication, instruct the mobile device to proceed with the payment via the wireless connection.

## Description

### TECHNICAL FIELD

The present disclosure generally relates to a vehicle system and method for e-commerce. More specifically, the present disclosure relates to a vehicle system and method for performing e-commerce transaction in a secured manner.

### BACKGROUND

Many modern vehicles are provided with phone as a key (PaaK) feature which enables the vehicle to access the vehicles without carrying a physical keyfob. The PaaK feature may be implemented via a mobile device (e.g., a smart phone) wirelessly running software in corporation with the vehicle. A digital key stored in the mobile device may be used for authentications with the vehicle. The PaaK feature provides a secured wireless connection between the vehicle and the mobile device.

### SUMMARY

In one or more illustrative examples of the present disclosure, a system for a vehicle includes a wireless transceiver configured to communicate with a mobile device via a wireless connection encrypted using a digital key, wherein the digital key allows the mobile device to access a driving function of a vehicle; and one or more controllers programmed to responsive to a user input indicative of an intent to make a purchase by a user of the vehicle, transmit a request to the mobile device to launch a payment for the purchase via the wireless connection, perform an authentication by interacting with the user to authorize the payment, and responsive to the authentication, instruct the mobile device to proceed with the payment via the wireless connection.

In one or more illustrative examples of the present disclosure, a method includes responsive to a user input indicative of an intent to make a purchase by a user of a vehicle, transmitting, via a wireless transceiver, a request to a mobile device to launch a payment for the purchase via a wireless connection; communicating, via the wireless transceiver, with the mobile device via the wireless connection encrypted using a digital key, wherein the digital key allows the mobile device to access a driving function of the vehicle; performing, via one or more controllers, an authentication by interacting with the user to authorize the payment; and responsive to the authentication, instructing, via the one or more controllers, the mobile device to proceed with the payment via the wireless connection.

In one or more illustrative examples of the present disclosure, a non-transitory computer-readable medium includes instructions, when executed by one or more controllers of a vehicle, cause the vehicle to responsive to a user input indicative of an intent to make a purchase by a user of the vehicle, transmit a request to a mobile device to launch a payment for the purchase via a wireless connection; communicate with the mobile device via the wireless connection encrypted using a digital key, wherein the digital key allows the mobile device to access a driving function of a vehicle; perform an authentication by interacting with the user to authorize the payment; and responsive to the authentication, instruct the mobile device to proceed with the payment via the wireless connection.

### BRIEF DESCRIPTION OF THE DRAWINGS

For a better understanding of the invention and to show how it may be performed, embodiments thereof will now be described, by way of non-limiting example only, with reference to the accompanying drawings, in which:
Figure 1 illustrates an example block topology of a vehicle system of one embodiment of the present disclosure; and
Figure 2 illustrates an example flow diagram of a process for performing e-commerce and operating the vehicle of embodiment of the present disclosure.

### DETAILED DESCRIPTION

Embodiments are described herein. It is to be understood, however, that the disclosed embodiments are merely examples and other embodiments may take various and alternative forms. The figures are not necessarily to scale. Some features could be exaggerated or minimized to show details of particular components. Therefore, specific structural and functional details disclosed herein are not to be interpreted as limiting, but merely as a representative basis for teaching one skilled in the art.

Various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

The present disclosure, among other things, proposes a vehicle system and method for performing e-commerce transactions. More specifically, the present disclosure proposes a vehicle system and method for performing e-commerce transaction in corporation with a mobile device in a secured manner.

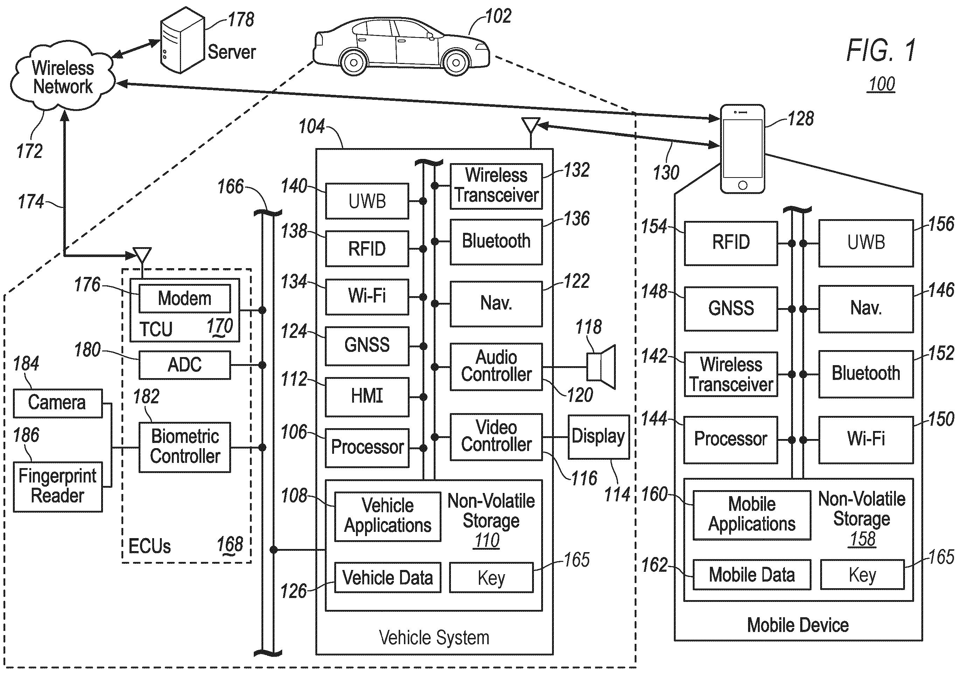

Referring to FIGURE 1, an example block topology of a vehicle system 100 of one embodiment of the present disclosure is illustrated. A vehicle 102 may include various types of automobile, crossover utility vehicle (CUV), sport utility vehicle (SUV), truck, recreational vehicle (RV), boat, plane, or other mobile machine for transporting people or goods. In many cases, the vehicle 102 may be powered by an internal combustion engine. As another possibility, the vehicle 102 may be a battery electric vehicle (BEV), a hybrid electric vehicle (HEV) powered by both an internal combustion engine and one or more electric motors, such as a series hybrid electric vehicle (SHEV), a plug-in hybrid electric vehicle (PHEV), or a parallel/series hybrid vehicle (PSHEV), a boat, a plane or other mobile machine for transporting people or goods.

As illustrated in Figure 1, a vehicle system 104 may include one or more processors 106 configured to perform instructions, commands, and other routines in support of the processes described herein. For instance, the vehicle system 104 may be configured to execute instructions of vehicle applications 108 to provide features such as navigation, digital key processing, and wireless communications. Such instructions and other data may be maintained in a non-volatile manner using a variety of types of computer-readable storage medium 110. The computer-readable medium 110 (also referred to as a processor-readable medium or storage) includes any non-transitory medium (e.g., tangible medium) that participates in providing instructions or other data that may be read by the processor 106 of the vehicle system 104. Computer-executable instructions may be compiled or interpreted from computer programs created using a variety of programming languages and/or technologies, including, without limitation, and either alone or in combination, Java, C, C++, C#, Objective C, Fortran, Pascal, Java Script, Python, Perl, and SQL.

The vehicle system 104 may be provided with various features allowing the vehicle occupants/users to interface with the vehicle system 104. For example, the vehicle system 104 may receive input from human-machine interface (HMI) controls 112 configured to provide for occupant interaction with the vehicle 102. As an example, the vehicle system 104 may interface with one or more buttons (not shown) or other HMI controls configured to invoke functions on the vehicle system 104 (e.g., steering wheel audio buttons, a push-to-talk button, instrument panel controls, etc.).

The vehicle system 104 may also drive or otherwise communicate with one or more displays 114 configured to provide visual output to vehicle occupants by way of a video controller 116. In some cases, the display 114 may be a touch screen further configured to receive user touch input via the video controller 116, while in other cases the display 114 may be a display only, without touch input capabilities. The vehicle system 104 may also drive or otherwise communicate with one or more speakers 118 configured to provide audio output and input to vehicle occupants by way of an audio controller 120.

The vehicle system 104 may also be provided with navigation and route planning features through a navigation controller 122 configured to calculate navigation routes responsive to user input via e.g., the HMI controls 112, and output planned routes and instructions via the speaker 118 and the display 114. Location data that is needed for navigation may be collected from a global navigation satellite system (GNSS) controller 124 configured to communicate with multiple satellites and calculate the location of the vehicle 102. The GNSS controller 124 may be configured to support various current and/or future global or regional location systems such as global positioning system (GPS), Galileo, Beidou, Global Navigation Satellite System (GLONASS) and the like. Map data used for route planning may be stored in the storage 110 as a part of the vehicle data 126. Navigation software may be stored in the storage 110 as a part of the vehicle applications 108.

The vehicle system 104 may be configured to wirelessly communicate with a mobile device 128 of the vehicle users/occupants via a wireless connection 130. The mobile device 128 may be any of various types of portable computing devices, such as cellular phones, tablet computers, wearable devices, smart watches, smartfobs, laptop computers, portable music players, or other device capable of communication with the vehicle system 104. A wireless transceiver 132 may be in communication with a Wi-Fi controller 134, a BLUETOOTH controller 136, a radiofrequency identification (RFID) controller 138, an ultra-wideband (UWB) controller 140, and other controllers such as a Zigbee transceiver, an IrDA transceiver, a near-field communication (NFC) controller (not shown), and configured to communicate with a compatible wireless transceiver 142 of the mobile device 128.

The mobile device 128 may be provided with a processor 144 configured to perform instructions, commands, and other routines in support of the processes such as navigation, telephone, wireless communication, and PaaK features in communication with the vehicle 102. For instance, the mobile device 128 may be provided with location and navigation functions via a navigation controller 146 and a GNSS controller 148. The mobile device 128 may be provided with a wireless transceiver 142 in communication with a Wi-Fi controller 150, a BLUETOOTH controller 152, a RFID controller 154, an UWB controller 156, and other controllers (not shown), configured to communicate with the wireless transceiver 132 of the vehicle system 104. The mobile device 128 may be further provided with a non-volatile storage 158 to store various mobile application 160 and mobile data 162.

The mobile device 128 may support the PaaK features and operate as a key to access various features of the vehicle 102. More specifically, the mobile device 128 may generate and send one or more digital keys 165 to the vehicle system 104. The digital key 165 may be stored in both the storage 110 of the vehicle 102 and the storage of the mobile device 158. In one example, the digital key 165 may be in support of the two parts configuration. The digital key 165 may include a private key stored in the mobile device 128, and a public key that is stored in the vehicle system 104. In an alternative example, the digital key 165 may be generated via an entity other than the mobile device 128. For instance, the digital key may be generated via the vehicle system 104. The digital key may be used to encrypt the wireless communication between the vehicle 102 and the mobile device 128. Responsive to receiving the wireless communication, the respective vehicle system 104 and the mobile device 128 may validate the communication using the digital key and proceed accordingly responsive to a successfully validation.

The vehicle system 104 may be further configured to communicate with various components of the vehicle 102 via one or more in-vehicle network 166. The in-vehicle network 166 may include, but is not limited to, one or more of a controller area network (CAN), an Ethernet network, and a media-oriented system transport (MOST), as some examples. Furthermore, the in-vehicle network 166, or portions of the in-vehicle network 166, may be a wireless network accomplished via BLE, Wi-Fi, UWB, or the like.

The vehicle system 104 may be configured to communicate with various ECUs 168 of the vehicle 102 configured to perform various operations. For instance, the vehicle system may be configured to communicate with a TCU 170 configured to control telecommunication between the vehicle 102 and a wireless network 172 through a wireless connection 174 using a modem 176. The wireless connection 174 may be in the form of various communication network e.g. a cellular network. Through the wireless network 172, the vehicle may access one or more servers 178 to access various content for various purposes. Additionally or alternatively, the vehicle 102 may access the wireless network via the mobile device 128. In some cases, the vehicle 102 is not provided with the TCU 170 and the vehicle system 104 may require external devices such as the mobile device 128 to access the wireless network 172. In an alternative example, using the TCU 170 to access the wireless network 172 may incur extra costs due to the configuration of the mobile carrier. Therefore, it may be preferrable to access the wireless network 172 when the mobile device 128 is present. It is noted that the terms wireless network and server are used as general terms in the present disclosure and may include any computing network involving carriers, router, computers, controllers or the like configured to store data and perform data processing functions and facilitate communication between various entities.

The ECUs 168 may further include an autonomous driving controller (ADC) 180 configured to provide autonomous driving features to the vehicle 102. The ADC 180 may operate the vehicle to one or more destinations in corporation with the navigation controller 122.

The ECUs 168 may further include a biometric controller 182 configured to verify and authenticate biometric information of a user. The biometric controller 182 may be in communication with various biometric sensors configured to collect biometric data of the user. For instance, the biometric sensors may include a camera 184 configured to capture a facial image of the user. The biometric sensors may further include a fingerprint reader 186 configured to collect fingerprints of the user for authentications.

The present disclosure proposes a system and method for performing e-commerce vehicle system 104 in corporation with the mobile device 128. More specifically, the present disclosure utilizes the digital key 165 to enhance the security of the e-commerce transactions. For instance, the user of the vehicle 102 may place an e-commerce online order (e.g., grocery pickup order) via the HMI controls 112 of the vehicle system 104 connected to the wireless network through the mobile device 128 using the digital key 165. Digital wallet authentications may be performed via the vehicle 102 and/or via the mobile device 128. Responsive to a successful authentication, the order may be placed and the payment transaction may be processed. Additionally, the vehicle system 104 may provide the user with navigation instructions to the order pickup location. Additionally, the vehicle 102 may autonomously drive to the pickup location via the ADC 180.

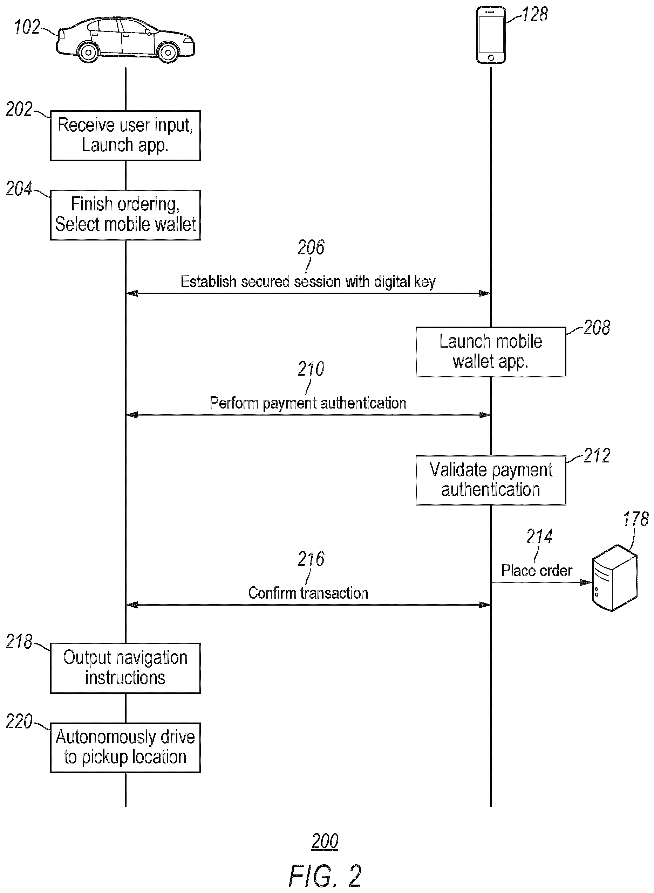

Referring to Figure 2, an example flow diagram of a process 200 for performing e-commerce and operating the vehicle of one embodiment of the present disclosure is illustrated. With continuing reference to Figure 1, the process 200 may be implemented via one or more components of the vehicle system 104 in combination with other components of the vehicle 102 and the mobile device 128. For simplicity, the following description will be made with reference to the vehicle system 104 and the mobile device 128 although the present disclosure is not limited thereto.

At operation 202, responsive to receiving a user input via the HMI controls 112 indicative of a user intent to perform e-commerce operations, the vehicle system 104 launches one or more vehicle application 108 corresponding to the e-commerce. As discussed above, the vehicle system 104 may be provided with various vehicle applications 108 stored in the storge 110. The vehicle applications 108 may include one or more applications configured to provide e-commerce features. The vehicle applications 108 may be configured to communicate with one or more servers 178 to place online orders for delivery and/or pickup. For example, the vehicle applications 108 may include a fast-food application configured to allow the user to place online orders for pickup. Additionally or alternatively, the vehicle applications 108 may include a retail/grocery application configured to allow the user to make purchases with one or more retailers via the servers 178. As discussed above, the vehicle system 104 may access the wireless network 172 using the TCU 170 and/or the mobile device 128. In general, using the mobile device 128 to access the wireless network 172 may be preferred in the present example due to cost savings and having access to the mobile wallet features enabled by the mobile device 128. If the mobile device 128 is used to provide the wireless network access, the vehicle system 104 may be connected to the mobile device 128 through the wireless connection 130 via Bluetooth, UWB or the like. Additionally, the digital key 165 may be used to encrypt the wireless connection 130 to increase data securities.

At operation 204, responsive to the user finishing the order and checking out, the vehicle system 104 receives a user selection indicative of the user intends to use the mobile wallet option for the payment. In the present disclosure, the mobile wallet option requires the vehicle system 104 to access the mobile device 128 to operate. Although the vehicle application 108 may be configured to support payment options independent from the mobile device 128, using the mobile wallet for payments may be associated with benefits. For instance, the user may more conveniently access the mobile wallet feature as it is more often used (with or without the vehicle system 104). Further, in ride sharing situations (e.g., the user does not own the vehicle 102), the vehicle system 104 may not have any payment options set up for the user. Some users may be reluctant to provide personal information including payment information to someone else's vehicle. Therefore, using the mobile wallet option through the mobile device 128 associated with the user may be a preferrable option for payments.

In response to the user selection of the mobile wallet payment option, at operation 206, the vehicle system 104 establishes a secured session with the mobile device 128 using the digital key 165. Alternatively, a secured wireless connection 130 may have already been established to provide the vehicle system 104 with wireless network access. In this case, the same wireless connection 130 may be used to enable to the secured session for payment transactions. The vehicle system 104 transmits the request to access the mobile wallet feature to the mobile device 128 via the secured session.

Responsive to receiving the request, at operation 208, the mobile device 128 launches one or more mobile applications 160 corresponding to the mobile wallet accordingly. The one or more applications 160 may be used to process the request received from the vehicle system 104. In one example, the mobile device 128 may directly approve the transaction and proceed with the payment. However, this option may be unpreferable due to the lack of manual authentication by the user. In general, one or more manual authentications by the user may be preferred to enhance the security of the payment transactions.

At operation 210, the mobile device 128 communicates with the vehicle system 104 to perform one or more payment authentications by the user. There are a number of methods to perform the payment authentications. For instance, the user may authenticate the payment transactions via one or more biometric inputs. Additionally or alternatively, the user may manually enter a personal identification number (PIN) to the vehicle system 104 and/or the mobile device to complete the authentication. The user may be requested to perform the payment authentications via the vehicle 102 and/or via the mobile device 128. As discussed above, the vehicle 102 may be provided with a biometric controller 182 in support of various biometric input authentications. The biometric controller 182 may receive a biometric input (e.g., facial image, fingerprint or the like) and verify the input with the already recorded data associated with the user. Responsive to a successfully verification, the biometric controller 182 may output a message to the vehicle system 104 indicative of an approval of the payment authentication. Additionally or alternatively, the vehicle 102 may be configured to only collect the biometric information from the user and transmits the biometric information to the mobile device 128 for authentication via the secured session. Additionally or alternatively, the vehicle system 104 may request to the user to input a preset PIN via the touch screen display 114 to verify the user's identity.

The same biometric and manual input operations may also be performed by the mobile device 128 in addition to or in lieu of by the vehicle 102. Additionally or alternatively, the vehicle 104 and the mobile device 128 may split the authentications to further enhance the security. For instance, the vehicle 102 may perform a first authentication (e.g., facial recognition, PIN) and the mobile device 128 may perform a second authentication (e.g., fingerprint, PIN) that is different from the first authentication.

At operation 212, responsive to receiving the payment authentication (or biometric data) from the vehicle system 104 and/or from the mobile device 128 itself, the mobile device 128 performs validations to the payment authentication, and proceeds to operation 214 responsive to a successful validation.

At operation 214, the one or more mobile applications 160 associated with the mobile wallet communicate with one or more servers 178 in support of the online payment associated with the mobile wallet and proceed with the payment transaction.

Responsive to successfully completing the payment transaction, at operation 216, the mobile device 128 sends a transaction confirmation to the vehicle system 104 to complete the e-commerce transaction.

At operation 218, the vehicle system 104 sets the pickup location of the purchase (e.g., a fast-food restaurant) as a navigation destination and outputs navigation instructions to direct user to drive to the pickup location.

Additionally, at operation 220, the vehicle 102 may drive to the pickup location in an autonomous manner via the ADC 180. The ADC 180 may perform vehicle maneuvers in an autonomous manner with the pickup location set as the navigation destination, such that the vehicle 102 arrives to pick up the purchase without user driving inputs.

The algorithms, methods, or processes disclosed herein can be deliverable to or implemented by a computer, controller, or processing device, which can include any dedicated electronic control unit or programmable electronic control unit. Similarly, the algorithms, methods, or processes can be stored as data and instructions executable by a computer or controller in many forms including, but not limited to, information permanently stored on non-writable storage media such as read only memory devices and information alterably stored on writeable storage media such as compact discs, random access memory devices, or other magnetic and optical media. The algorithms, methods, or processes can also be implemented in software executable objects. Alternatively, the algorithms, methods, or processes can be embodied in whole or in part using suitable hardware components, such as application specific integrated circuits, fieldprogrammable gate arrays, state machines, or other hardware components or devices, or a combination of firmware, hardware, and software components.

While exemplary embodiments are described above, it is not intended that these embodiments describe all possible forms encompassed by the claims. The words used in the specification are words of description rather than limitation, and it is understood that various changes may be made without departing from the spirit and scope of the disclosure. The words processor and processors may be interchanged herein, as may the words controller and controllers.

As previously described, the features of various embodiments may be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics may be compromised to achieve desired overall system attributes, which depend on the specific application and implementation. These attributes may include, but are not limited to strength, durability, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and may be desirable for particular applications.

## Claims

1. A system for a vehicle, comprising:
a wireless transceiver configured to communicate with a mobile device via a wireless connection encrypted using a digital key, wherein the digital key allows the mobile device to access a driving function of a vehicle; and
one or more controllers programmed to:
responsive to a user input indicative of an intent to make a purchase by a user of the vehicle, transmit a request to the mobile device to launch a payment for the purchase via the wireless connection,
perform an authentication by interacting with the user to authorize the payment, and
responsive to the authentication, instruct the mobile device to proceed with the payment via the wireless connection.

2. The system of claim 1, wherein the authentication is performed by verifying a biometric information of the user.

3. The system of claim 2, wherein the biometric information includes a fingerprint.

4. The system of claim 2, wherein the biometric information includes a facial image.

5. The system of claim 1, wherein the authentication is performed by receiving a passcode from the user.

6. The system of claim 1, wherein the one or more controllers are further programmed to:
generate navigation instructions corresponding to a destination of a pickup location of the purchase.

7. The system of claim 6, wherein the one or more controllers are further programmed to:
autonomously drive the vehicle to the destination.

8. A method, comprising:
responsive to a user input indicative of an intent to make a purchase by a user of a vehicle, transmitting, via a wireless transceiver, a request to a mobile device to launch a payment for the purchase via a wireless connection;
communicating, via the wireless transceiver, with the mobile device via the wireless connection encrypted using a digital key, wherein the digital key allows the mobile device to access a driving function of the vehicle;
performing, via one or more controllers, an authentication by interacting with the user to authorize the payment; and
responsive to the authentication, instructing, via the one or more controllers, the mobile device to proceed with the payment via the wireless connection.

9. The method of claim 8, further comprising:
verifying, via the one or more controllers, a biometric information of the user to perform the authentication.

10. The method of claim 9, wherein the biometric information includes a fingerprint.

11. The method of claim 9, wherein the biometric information includes a facial image.

12. The method of claim 8, further comprising:
verifying, via the one or more controllers, a passcode from the user to perform the authentication.

13. The method of claim 8, further comprising:
generating navigation instructions corresponding to a destination of a pickup location of the purchase.

14. The method of claim 13, further comprising:
autonomously driving, via the one or more controllers, the vehicle to the destination.
